# EUROPÄISCHE PATENTSCHRIFT

(11) **EP 2 898 224 B1**
(45) Veröffentlichungstag und Bekanntmachung des Hinweises auf die Patenterteilung: **17.07.2019**
(21) Anmeldenummer: 13791906.4
(22) Anmeldetag: 13.09.2013
(51) Int. Cl.: F15B 15/14, F16B 4/00, F16B 21/18

(54) **ARBEITSZYLINDER**
WORKING CYLINDER
VÉRIN

(30) Priorität: 19.09.2012 DE 202012009001 U
(43) Veröffentlichungstag der Anmeldung: 29.07.2015
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2013/000526
(87) Internationale Veröffentlichungsnummer: WO 2014/044240

(56) Entgegenhaltungen:
- WO-A1-2009/116857
- FR-A- 1 135 349
- FR-A- 1 363 852
- US-A- 3 643 551
- US-A- 5 680 808
- US-A1- 2009 110 476

## Beschreibung

Die Erfindung betrifft einen Arbeitszylinder, insbesondere vorliegend als hydraulischer oder pneumatischer Druckstromverbraucher.

Arbeitszylinder als hydraulische oder pneumatische Druckstromverbraucher sind generell aus dem Stand der Technik bekannt.
Derartige Arbeitszylinder sind in der Regel mehrteilig ausgebildet und weisen unter anderem ein Zylinderrohr und ein mit diesem verbundenes Verschlusselement auf.

Die Verbindung des Verschlusselements mit dem Zylinderrohr erfolgt dabei bekanntermaßen durch eine form- und/oder kraft- und/oder stoffschlüssige Verbindung, wobei die Verbindung je nach Anwendungsfall sowohl lösbar als auch nicht lösbar ausgeführt sein kann.

Lösbare Verbindungen im engeren Sinne werden hierbei meist durch Verschrauben der Zylinderkomponenten oder durch Passverbindungen realisiert wohingegen die nicht lösbaren Verbindungen in der Regel durch Verschweißen oder Verlöten der Zylinderkomponenten bereitgestellt werden.

Ein verschraubter Arbeitszylinder ist beispielsweise aus der Druckschrift EP 0 880 652 B1 bekannt.
Hierbei werden die Verschlussteile des Arbeitszylinders durch eine Gewindepaarung miteinander verbunden.
Ein solches Verschrauben der Zylinderkomponenten stellt sich jedoch insbesondere dahingehend als nachteilig dar, dass zur Sicherstellung der Dichtheit des Arbeitszylinders und zur Bereitstellung einer erforderlichen Lagekonformität der Hauptanschlüsse ein weitreichender technologischer Aufwand erforderlich ist, was wiederum hohe Kosten für die Herstellung eines solchen Arbeitszylinders bedingt.

Einen gattungsgemäßen Arbeitszylinder mit einer nicht lösbaren Verbindung zwischen den jeweiligen Zylinderkomponenten offenbart die Druckschrift DE 2 060 383 A, wobei hier die Verschlussteile durch Verschweißen mit dem Zylinderrohr verbunden sind.
Die Nachteile dieser technischen Lösung liegen insbesondere in dem zusätzlichen Verfahrensaufwand für das Verschweißen und in, unter Umständen durch den Wärmeeintrag bei dem Verschweißen hervorgerufenen, Materialungenauigkeiten des Zylinderrohres oder der Verschlussteile begründet.
Des Weiteren besteht hierbei die Möglichkeit, dass sich der Wärmeeintrag durch das Verschweißen negativ auf die Dauerfestigkeit der bereitgestellten Verbindung auswirkt.
Des Weiteren ist es aus dem Stand der Technik bekannt, einzelne Komponenten eines Arbeitszylinders, insbesondere Verschlussteil und Zylinderrohr, mittels eines Kopplungsrings formschlüssig miteinander zu verbinden.
Hierzu weisen die zu verbindenden Komponenten jeweils korrespondierende Ringnuten auf, in welche der Kopplungsring eingreift und so den Formschluss zwischen den Komponenten bereitstellt.
Ein Nachteil derartiger Verbindungen liegt darin, dass der Kopplungsring gegenüber der Breite der Ringnuten ein gewisses Untermaß aufweist, damit der Kopplungsring bei der Montage seine Endlage in den Ringnuten einnehmen kann. Hieraus resultiert ein minimales Spiel, welches bei Lastwechselzuständen des Arbeitszylinders zu minimalen axialen Relativbewegungen zwischen Verschlussteil und Zylinderrohr führen kann.
Durch diese Relativbewegungen entstehen unerwünschte Abriebschrotungen der zwischen den Komponenten vorhandenen Dichtungselemente, welche im ungünstigen Fall zu einem Defekt der Dichtungselemente und somit zu einem Ausfall des Arbeitszylinders führen.

Ein Arbeitszylinder gemäß dem Oberbegriff des Anspruchs 1 ist aus US 3 643 551 bekannt.

Es ist daher Aufgabe der Erfindung, einen Arbeitszylinder bereitzustellen, welcher besonders einfach und kostengünstig herstellbar ist und welcher gleichzeitig, auch bei Lastwechselbelastungen, eine hohe Dauerfestigkeit und Dichtheit und dadurch eine erhöhte Verwendungsdauer aufweist.

Die Aufgabe wird durch die im Patentanspruch 1 aufgeführten Merkmale gelöst. Bevorzugte Weiterbildungen ergeben sich aus den Unteransprüchen.

Ein erfindungsgemäßer Arbeitszylinder weist einen ersten Kopplungspartner und einen zweiten Kopplungspartner auf. Der erste Kopplungspartner ist hierbei als Zylinderrohr und der zweite Kopplungspartner als Verschlusselement ausgebildet. Bei einem Verschlusselement kann es sich sowohl um einen Zylinderboden als auch um ein Führungsteil, welches beispielsweise eine Kolbenstange aufnimmt, handeln.

Darüber hinaus ist erfindungsgemäß einer der Kopplungspartner in den jeweils anderen Kopplungspartner eingeschoben.
Unter eingeschoben wird in diesem Zusammenhang verstanden, dass ein Kopplungspartner von dem jeweils anderen Kopplungspartner radial umgriffen wird.

Der Arbeitszylinder zeichnet sich erfindungsgemäß dadurch aus, dass die Kopplungspartner jeweils eine Ringnut aufweisen, welche vorzugsweise umlaufend ausgeführt ist und wobei die Ringnut des eingeschobenen Kopplungspartners durch eine Außennut und die Ringnut des anderen Kopplungspartners durch eine Innennut gebildet werden.

Die axiale Positionierung der Ringnut in den Kopplungspartnern erfolgt dabei erfindungsgemäß derart, dass sich die Ringnuten im gekoppelten Zustand der Kopplungspartner korrespondierend gegenüberliegen.
Unter einem korrespondierenden Gegenüberliegen wird in diesem Zusammenhang verstanden, dass die Öffnungsbereiche der Ringnuten einander zugewandt sind und sich, in axialer Richtung des Arbeitszylinders, auf gleicher Höhe befinden. Darüber hinaus weist ein erfindungsgemäßer Arbeitszylinder einen elastisch spannbaren Kopplungsring auf.

Dieser Kopplungsring ist bei einer elastischen Verformung in dessen radiale Spannrichtung vollständig von der Ringnut eines Kopplungspartners aufnehmbar.
Die radiale Spannrichtung beschreibt dabei die Verformungsrichtung des Kopplungsrings, in welche sich dieser durch eine äußere radiale Krafteinwirkung verformt, wodurch eine radiale Vorspannung in dem Kopplungsring erzeugt wird.

Das vollständige Aufnehmen des Kopplungsrings in der Ringnut eines Kopplungspartners erfolgt besonders vorteilhaft gerade soweit, dass ein ungehindertes Einschieben des einen Kopplungspartners in den anderen Kopplungspartner gewährleistbar ist.
Hierzu weist die, den Kopplungsring vollständig aufnehmende, Ringnut erfindungsgemäß einen Ausdehnungsraum auf, in welchen der Kopplungsring, während des Ineinanderschiebens der Kopplungspartner, ausweichen kann.

Bei einem Einstellen einer Montageendlage, also einer Lagebeziehung der Kopplungspartner zueinander, bei welcher sich deren Ringnuten korrespondierend gegenüberliegen, führt der Kopplungsring erfindungsgemäß eine Verformung in dessen Entspannrichtung aus.
In diesem Zusammenhang beschreibt die Entspannrichtung die Verformungsrichtung des Kopplungsrings, in welche sich dieser aufgrund der vorhandenen Vorspannung verformt.

Die Verformung des Kopplungsrings in dessen Entspannrichtung bewirkt auf besonders vorteilhafte Weise, dass dieser in der Montageendlage in die Ringnut des anderen Kopplungspartners eindringt und mit diesem somit in Eingriff steht. Durch ein Anliegen der axialen Außenwandungen des Kopplungsrings an den axialen Wandungen der Ringnuten beider Kopplungspartner wird eine formschlüssige Verbindung zwischen den Kopplungspartnern bereitgestellt. Die Kopplungspartner sind durch den Formschluss in ihrer axialen Lagebeziehung zueinander festgelegt.

Axiale Kräfte bewirken eine Scherbelastung des Kopplungsrings. Es ist von der erfindungsgemäßen Lösung auch umfasst, dass mehrere Kopplungsringe axial aneinander anliegend in einem entsprechend breit geformten Ringnutpaar angeordnet sein können, um hohe Scherkräfte aufnehmen zu können. Vorzugsweise liegt der Kopplungsring im Kopplungszustand mit seiner radialen Außenwandung federnd auf der Nutengrundwandung der Ringnut des anderen Kopplungspartner an, so dass er in seiner Lage zuverlässig festgelegt ist.

Der erfindungsgemäße Arbeitszylinder zeichnet sich ferner dadurch aus, dass der jeweils einzuschiebende Kopplungspartner ein entsprechendes Übermaß aufweist und dass so in der Montageendlage eine Presspassung zwischen den Kopplungspartnern entsteht. Die Presspassung stellt einen Reibschluss zwischen den Kopplungspartnern her. Über den Reibschluss sind axial wirkende Kräfte aufnehmbar. Zudem sind die Kopplungspartner gegen Verdrehung gesichert.

Auf diese Weise wird, als besonderer technologischer Vorteil der Lösung, eine Hybridkopplung aus einer kraftschlüssigen Kopplung durch die Presspassung und einer formschlüssigen Kopplung durch den Kopplungsring bereitgestellt, welche sich durch eine Erhöhung der maximal aufnehmbaren axialen Kräfte und eine Verbesserung der Dauerfestigkeit des Arbeitszylinders auszeichnet. Die axial aufzunehmenden Kräfte können auf die beiden Kopplungen aufgeteilt werden, wobei das Verhältnis durch konstruktive Maßnahmen festgelegt werden kann.

Die beiden Kopplungspartner werden durch den Reibschluss axial spielfrei zueinander festgelegt. Ein eventuell unter einem Wechsel von Belastung und Entlastung des Arbeitszylinders im bestimmungsgemäßen Betrieb auftretendes, axiales Wandern der Kopplungspartner zueinander, welches beispielsweise zu einer Beschädigung etwa vorhandener Dichtungselemente führen könnte, kann als besonderer Vorteil somit verhindert werden.

Es wirken erfindungsgemäß die formschlüssige Verbindung über den Kopplungsring und die kraftschlüssige Verbindung durch den Reibschluss zwischen den Kopplungspartner zusammen.

Insbesondere wird durch den Reibschluss die Relativposition zwischen den Kopplungspartnern, die diese unter hohen Belastungen einnehmen und einer Spielendlage des Kopplungsrings zu den axialen Seitenwandungen der Ringnuten entspricht, auch bei einem Lastwechsel beibehalten. Der Reibschluss wird also zumindest bei vollem Betriebsdruck überwunden, sodass die Kopplungspartner in die Spielendlage gebracht und dort durch den Formschluss an einer weiteren axialen Relativbewegung gehindert werden. Der Reibschluss verhindert jedoch eine axiale Rückwärtsbewegung aus dieser Spielendlage und legt also die Kopplungspartner in der Relativposition der Spielendlage zueinander fest.

Durch die vorgestellte Lösung wird somit ein Arbeitszylinder bereitgestellt, bei welchem die benötigten Kopplungspartner zum einen formschlüssig durch die Verwendung eines tragfähigen Kopplungsrings miteinander verbindbar sind, wobei die Verbindung besonders einfach durch Einschieben der Kopplungspartner ineinander erfolgt.
Zum anderen wird durch den bereitgestellten Reibschluss eine Relativbewegung zwischen den Kopplungspartner vollständig verhindert.

Erfindungsgemäß ist es darüber hinaus ebenfalls möglich, dass bei geringeren Belastungen die axialen Kräfte allein durch die kraftschlüssige Presspassung aufgenommen werden, wobei der Formschluss durch den Kopplungsring in diesem Fall lediglich als Sicherung gegen ein Ausziehen des eingeschobenen Kopplungspartners aus dem jeweils anderen Kopplungspartner wirkt.

Diese Kopplungslösung reduziert die Fertigungs-, Marterial- und Montagekosten, die ihrerseits einen erheblichen Einfluss auf die Reduzierung der Energiekosten ausüben.

Negative Auswirkungen einer Wärmebeaufschlagung, wie dies beispielsweise bei einer Schrumpfkopplung oder bei einer Schweißverbindung der Fall sein kann, entfallen.

Gegenüber den bekannten Lösungen weist ein erfindungsgemäßer Arbeitszylinder somit die technologischen Vorteile auf, dass dieser zum einen besonders einfach herstellbar ist und dass zum anderen keine zusätzlichen Verfahrensschritte, insbesondere zum Herstellen einer stoffschlüssigen Verbindung der Kopplungspartner, notwendig sind, wodurch vor allem die Herstellungskosten eines solchen Arbeitszylinders gesenkt werden können.
Darüber hinaus zeichnet sich ein erfindungsgemäßer Arbeitszylinder gegenüber herkömmlichen Vorrichtungen durch eine höhere Dauerfestigkeit und somit durch eine gesteigerte Verwendungsdauer aus. Als weiterer wesentlicher Vorteil kann jede Winkellage der Verschlussteile und somit die Lage der Hauptanschlüsse problemlos und ohne zusätzlichen Aufwand bereitgestellt werden.

In einer bevorzugten Weiterbildung der Erfindung ist der zweite Kopplungspartner, also das Verschlussteil in den ersten Kopplungspartner, also das Zylinderrohr, einschiebbar, wobei der Kopplungsring von der Ringnut des zweiten Kopplungspartners vollständig aufnehmbar ist.

Der technologische Vorteil dieser Weiterbildung ergibt sich insbesondere dadurch, dass die, für die vollständige Aufnahme des Kopplungsrings in gespannter Lage notwendige, tiefere Ringnut in dem zweiten Kopplungspartner und somit in dem Verschlusselement und nicht in dem, als erster Kopplungspartner agierenden, Zylinderrohr angeordnet ist.
Somit wird besonders vorteilhaft eine Verwendung auch dünnwandiger Zylinderrohre ermöglicht.

Darüber hinaus ergeben sich hierdurch Montagevorteile, da der Kopplungsring, vor dem Herstellen der formschlüssigen Verbindung, lediglich auf den zweiten Kopplungspartner aufgeschoben und nicht aufwendig in den ersten Kopplungspartner eingesetzt werden muss.

Die Erfindung ist hierbei jedoch nicht auf die Anordnung der tieferen Ringnut in dem zweiten Kopplungspartner beschränkt. Vielmehr ist es je nach Anwendungsfall ebenfalls möglich, die Ringnut zur vollständigen Aufnahme des Kopplungsrings in dem ersten Kopplungspartner und somit in dem Zylinderrohr anzuordnen.

Des Weiteren umfasst die erfindungsgemäße Lösung auch eine Konfiguration eines Arbeitszylinders, bei welcher das Zylinderrohr in das Verschlusselement eingeschoben ist.

Bei einer Weiterbildung des erfindungsgemäßen Arbeitszylinders gemäß Anspruch 3 weist der zweite Kopplungspartner, also das Verschlussteil, eine Überkragung auf, wobei die Überkragung den ersten Kopplungspartner an dessen äußerer Mantelfläche abschnittsweise übergreift.

Eine solche Überkragung des ersten Kopplungspartners und somit des Zylinderrohres führt, insbesondere bei hohen Innendrücken in dem Zylinderrohr, wodurch das Zylinderrohr elastisch aufgeweitet wird, auf besonders vorteilhafte Weise zu einer Erhöhung der axial aufnehmbaren Kräfte, da der mehrachsige Spannungszustand im Zylinderrohr zugunsten der axialen Kräfte verschoben werden kann.

Ein weiterer Vorteil kann sich ergeben, indem das Zylinderrohr im Bereich der Überkragung einen zusätzlichen Reibschluss zwischen den Kopplungspartnern bereitstellt.

Im Falle einer zusätzlichen kraftschlüssigen Kopplung bei einem Arbeitszylinder mit aufgeschobenem Zylinderrohr und der Bereitstellung einer Pressverbindung gemäß Anspruch 1, wirkt die Überkragung zudem vorteilhaft gegen eine Minderung des Kraftschlusses der Reibverbindung.

In einer weiteren vorteilhaften Variante der Erfindung weist der Kopplungsring oder der, den Kopplungsring nicht vollständig aufnehmende Kopplungspartner eine Anlaufschräge auf.

Durch diese Anlaufschräge oder Anlaufschrägen wird während des Einschiebens des einen Kopplungspartners in den anderen Kopplungspartner, der Kopplungsring gespannt und die vollständige Aufnahme des Kopplungsrings in der jeweiligen Ringnut des, den Kopplungsring vollständig aufnehmenden, Kopplungspartners bewirkt.

Der Kopplungsring muss somit, als besonderer technologischer Vorteil, vor dem Ineinanderschieben der Kopplungspartner nicht durch zusätzliche Vorrichtungen oder Aufwendungen in die, ihn vollständig aufnehmende, Ringnut des jeweiligen Kopplungspartners gefügt werden.

Hinsichtlich der Anlaufschräge versteht sich für den Fachmann von selbst, dass bei speziellen Konfigurationen, insbesondere des Kopplungsringes, anstelle einer einzigen Anlaufschräge auch mehrere einzelne Anlaufschrägen an dem jeweiligen Kopplungspartner vorhanden sein können.

Des Weiteren sieht die Erfindung vorzugsweise vor, dass zwischen den beiden Kopplungspartnern ein Dichtelement angeordnet ist, welches im Bereich der formschlüssigen Verbindung einen Austritt eines Arbeitsmediums aus dem Arbeitszylinder verhindert.

Bei einem Einschieben des ersten Kopplungspartners in den zweiten Kopplungspartner kann ein solches Dichtelement besonders vorteilhaft, im Bereich der Anlaufschräge des ersten Kopplungspartners, in dem zweiten Kopplungspartner vorgehalten und so eine besonders einfache Montage des Dichtelements gewährleistet werden.

Die Kopplungspartner eines erfindungsgemäßen Arbeitszylinders weisen in einer bevorzugten Weiterbildung axial versetzt weitere Ringnuten zur Aufnahme weiterer, in gleicher Weise axial versetzter, Kopplungsringe auf.

Das Vorsehen mehrerer Ringnuten und mehrerer Kopplungsringe ist insbesondere dann von Vorteil, wenn die Verbindung während einer Verwendung des Arbeitszylinders hohen axialen Kräften ausgesetzt werden soll.

Um auch bei einer Anordnung mehrerer Kopplungsringe zwischen den Kopplungspartnern ein sicheres und schadfreies Ineinanderschieben der Kopplungspartner zu gewährleisten, weisen die Ringnuten vorzugsweise ebenfalls Anlaufschrägen auf, wobei durch die Anlaufschrägen ein erneutes vollständiges Aufnehmen der mehreren Kopplungsringe in den jeweiligen Ringnuten des, die Kopplungsringe vollständig aufnehmenden, Kopplungspartners bewirkt wird.

Ferner sieht eine weitere vorteilhafte Variante der Erfindung vor, dass der Kopplungsring einen kreisförmigen Querschnitt aufweist.

Gleichzeitig ist die geometrische Kontur der Ringnut des, den Kopplungsring nicht vollständig aufnehmenden Kopplungspartners, vorzugsweise zumindest teilweise an den kreisförmigen Querschnitt des Kopplungsrings angepasst. Ein Vorteil besteht dabei darin, dass sich, bei einer Belastung der formschlüssigen Verbindung der Kopplungspartner, die in der Ringnut des den Kopplungsring nicht vollständig aufnehmenden Kopplungspartners, auftretenden Kerbwirkungen im Vergleich zu einer Ringnut mit rechteckigem Querschnitt wirksam reduzieren lassen.

Zur Reduzierung der auftretenden Kerbwirkungen in dem anderen Kopplungspartner, kann dessen Ringnut in deren Nutengrund ebenfalls eine abgerundete Kontur aufweisen.

Gegenüber Kopplungsringen mit einem rechteckigen Querschnitt weist ein erfindungsgemäßer Kopplungsring mit kreisförmigem Querschnitt unter Belastung einen günstigeren Verlauf der Spannungen in seinem Inneren auf, wodurch insbesondere die Dauerhaltbarkeit der formschlüssigen Verbindung des Arbeitszylinders nochmals verbessert werden kann.

Gleichzeitig ist ein Kopplungsring mit kreisrundem Querschnitt besonders einfach und kostengünstig herstellbar.

Erfindungsgemäß weisen beide Kopplungspartner unterschiedlich hohe Elastizitätsmoduln auf. Um die Flächenpressung an den Seitenwandungen in den materialspezifisch zulässigen Flächenpressungswerten zu halten, zugleich aber die Ringnuten auch nicht tiefer auszubilden als erforderlich, wurde die Lösung gefunden, den Kopplungsring in seiner Eingrifflage in den Kopplungspartner mit dem geringeren Elastizitätsmodul mit einer größeren Überdeckungsfläche eingreifen zu lassen. Als Überdeckungsfläche ist der Flächenanteil der axial gerichteten Seitenwandung des Kopplungsrings zu verstehen, mit dem er axial belastet auf der Seitenwandung der Nut eines Kopplungspartners aufliegt. Die Überdeckungsflächen können dabei auf einfache Weise durch die Tiefe der Ringnut des, den Kopplungsring nicht vollständig aufnehmenden, Kopplungspartners und die Breite der axial gerichteten Seitenwandung des Kopplungsrings bestimmt werden. In Kombination mit der bevorzugten Ausführungsform nach Anspruch 3, bei der das Zylinderrohr außen liegt, kann die Tiefe der Ringnut in dem Zylinderohr sehr gering ausgebildet werden, während der Kopplungsring in der Eingriffslage entsprechend tiefer in das Verschlussteil eingreift.

In einer weiteren vorteilhaften Weiterbildung der Erfindung ist der Kopplungsring konisch ausgebildet.

Unter einer konischen Ausbildung wird in diesem Zusammenhang verstanden, dass der Kopplungsring einen Rechteckquerschnitt aufweist und dass sich aufgrund des Rechteckquerschnitts auf einer axialen Ober- und der Unterseite des Kopplungsrings zwei unterschiedliche Ringdurchmesser ausbilden, wobei die konische Ausbildung hierbei beispielsweisw bewirkt, dass der Ringdurchmesser der Oberseite des Kopplungsrings kleiner ist als der Ringdurchmesser der Unterseite. Die radialen Begrenzungsflächen entsprechen somit der Mantelfläche eines flachen Kegelstumpfes.

Gleichzeitig ist die Ringnut des, den Kopplungsring nicht vollständig aufnehmenden Kopplungspartners so ausgebildet, dass bei einer Verformung des Kopplungsrings in Entspannrich-tung ein Einkippen des konischen Kopplungsrings in die entsprechende Ringnut erfolgt und nach dessen Entspannung ein im Wesentlichen vollflächiges Anliegen der beiden axialen Wandungen des konischen Kopplungsrings an der jeweils korrespondierenden Wandung der beiden Ringnuten bewirkbar ist. Zur Herstellung der Formbarkeit eines konischen Kopplungsrings ist dieser segmentiert ausgebildet, wobei dies insbesondere durch axiale Einschnitte oder durch die Ausbildung des Kopplungsringes in mehreren Teilen erfolgen kann. Es lässt sich eine günstige, vergleichsweise geringe, Flächenpressung, was vor allem bei einem minderwertigeren Werkstoff insbesondere eines Verschlussteils vorteilhaft ist, bei einer gleichzeitig schmalen Ausführung des Kopplungsringes erreichen. Damit wird zugleich als besonderer Vorteil erreicht, dass die den Kopplungsring vollständig aufnehmende Ringnut lediglich so tief ausgebildet werden muss, wie es der Breite des Ringquerschnitts des konischen Kopplungsrings entspricht.

Durch eine derartige konische Ausbildung des Kopplungsrings wird eine besonders sichere und dauerfeste Verbindung der Kopplungspartner erzielt.

Des Weiteren sieht eine besonders vorteilhafte Ausbildung der Erfindung vor, dass in der, den Kopplungsring vollständig aufnehmenden Ringnut des jeweiligen Kopplungspartners ein elastisches Element vorgesehen ist.

Dieses elastische Element ist erfindungsgemäß so ausgebildet, dass dieses radial auf den Kopplungsring einwirkt und so dessen Verformung in Entspannrichtung optimiert.

Das elastische Element ermöglicht somit als Vorteil auf besonders einfache Art und Weise an jedem Punkt ein zuverlässiges Verformen des Kopplungsrings in dessen Entspannrichtung, wodurch, über die gesamte Länge des Kopplungsrings, dessen korrekter Sitz in den Ringnuten der Kopplungspartner gewährleistbar ist.

Das elastische Element kann dabei die federnde Spannbarkeit des Kopplungsrings auch vollständig allein übernehmen, wodurch Materialoptimierungen des Kopplungsrings ermöglicht werden.

In einer bevorzugten Weiterbildung des erfindungsgemäßen Arbeitszylinders sind in dem jeweils außenliegenden Kopplungspartner Zugangsöffnungen vorgesehen, welche ein, insbesondere mechanisches, Einwirken von Außen auf den Kopplungsring ermöglichen.

Durch das mechanische Einwirken auf den Kopplungsring wird dieser, im Bedarfsfall, soweit in die den Kopplungsring vollständig aufnehmende Ringnut des ersten oder zweiten Kopplungspartners eingedrückt, so dass ein Lösen der formschlüssigen Verbindung zwischen beiden Kopplungspartnern bewirkt wird. Die Kopplungspartner können danach wieder auseinandergezogen werden.

Das mechanische Einwirken kann dabei vorzugsweise durch Schrauben oder auch einfach durch Stifte erfolgen, die über ein spezielles Werkzeug nach innen verschoben werden bis die Fügungsebene der beiden Kopplungspartner von dem Kopplungsring unterschritten und so das Lösen des Formschlusses erzielt wird.
Es kann somit als besonderer technologischer Vorteil eine lösbare Verbindung zwischen den Kopplungspartnern eines erfindungsgemäßen Arbeitszylinders bereitgestellt werden, welche eine Demontage der Kopplungspartner und ggf. eine Reparatur oder Revision ermöglicht.

Die Erfindung wird nachfolgend in Ausführungsbeispielen anhand von
Fig. 1 Schnittdarstellung Arbeitszylinder mit einem Kopplungsring
Fig. 2 Halbschnitt Arbeitszylinder mit zwei Kopplungsringen
Fig. 3 Halbschnitt Arbeitszylinder mit kreisrundem Kopplungsringquerschnitt
Fig. 4 Halbschnitt Arbeitszylinder mit kreisrundem Kopplungsringquerschnitt und Überkragung
Fig. 5 Halbschnitt Arbeitszylinder mit konischem Kopplungsring
Fig. 6 Halbschnitt Arbeitszylinder mit konischem Kopplungsring und elastischem Element
Fig. 7 Schnittdarstellung Arbeitszylinder mit Zugangsöffnungen in Draufsicht
Fig. 8 Detaildarstellung Kopplungspartner in Spielendlage näher erläutert.

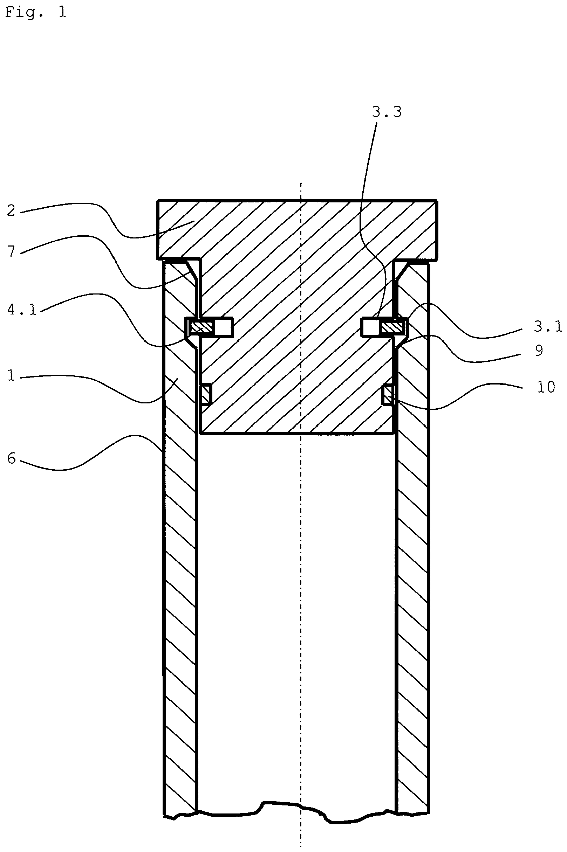

Fig. 1 zeigt einen erfindungsgemäßen Arbeitszylinder im Vollschnitt.

Der Arbeitszylinder ist mehrteilig ausgebildet und weist ein Zylinderrohr 1 und ein Verschlusselement 2 auf, wobei das Verschlusselement 2 teilweise in das Zylinderrohr 1 eingeschoben ist.

Zylinderrohr 1 und Verschlusselement 2 sind erfindungsgemäß mittels einer formschlüssigen Verbindung miteinander gekoppelt.
Die formschlüssige Verbindung wird vorliegend dadurch erreicht, dass innerhalb des Arbeitszylinders ein Kopplungsring 4.1 angeordnet ist.

Vorliegend weist der Kopplungsring 4.1 einen rechteckigen Querschnitt auf, wobei erfindungsgemäß auch Kopplungsringe mit andersförmigen Querschnitten angewendet werden können.

Zur Aufnahme des Kopplungsrings 4.1 weisen das Zylinderrohr 1 und das Verschlusselement 2 jeweils eine erste Ringnut 3.1 und 3.3 auf, wobei die erste Ringnut 3.1 des Zylinderrohres 1 als umlaufende Innennut und die erste Ringnut 3.3 des Verschlusselements 2 als umlaufende Außennut ausgebildet sind.

Die erste Ringnut 3.3 des Verschlusselements 2 ist im vorliegenden Ausführungsbeispiel so ausgebildet, dass diese den Kopplungsring 4.1 vollständig und insbesondere soweit aufnehmen kann, dass ein komplikationsfreies Einschieben des Verschlusselements 2 in das Zylinderrohr 1 gewährleistet werden kann.

Während des Einschiebens des Verschlusselements 2 in das Zylinderrohr 1 wird der Kopplungsring 4.1 in die erste Ringnut 3.3 des Verschlusselements 2 gedrückt und dabei in seine Verspannrichtung verspannt.
Erreicht das Verschlusselement 2 seine Montageendlage in dem Zylinderrohr 1, wobei sich die Ringnuten 3.1 und 3.3 korrespondierend gegenüberliegen, so wird es dem Kopplungsring 4.1 ermöglicht, sich in seine Entspannrichtung zu entspannen, wodurch ein gleichzeitiger Eingriff des Kopplungsrings 4.1 in die Ringnuten 3.1 und 3.3 herstellbar wird.

Der Formschluss der Kopplung des Zylinderrohres 1 und des Verschlusselements 2 wird erfindungsgemäß dadurch erzielt, dass in der Endlage des Verschlusselements 2 in dem Zylinderrohr 1, die dem verschlusselementseitigen Ende des Zylinderrohres 1 zugewandte Oberfläche des Kopplungsrings 4.1 an den dem Kopplungsring 4.1 zugewandten Wandungen der Ringnuten 3.1 und 3.3 anliegt.

Ein eventuelles Ausziehen des Verschlusselements 2 aus dem Zylinderrohr 1, insbesondere während einer Verwendung des Arbeitszylinders, wird somit wirkungsvoll vermieden.

Des Weiteren weist ein erfindungsgemäßer Arbeitszylinder ein Dichtelement 10 auf, durch welches, im Bereich der Kopplung zwischen Zylinderrohr 1 und Verschlusselement 2, ein Austritt eines Arbeitsmediums aus dem Arbeitszylinder verhindert wird.

Um während des Einschiebens des Verschlusselements 2 in das Zylinderrohr 1 das Eindrücken des Kopplungsrings 4.1 in die Ringnut 3.3 des Verschlusselements 2 zu bewirken und zugleich eine Beschädigung des Dichtelements 10 zu vermeiden, weist das Zylinderrohr 1 an dem dem Verschlusselement 2 zugewandten Ende zusätzlich eine umlaufend ausgebildete Anlaufschräge 7 auf.

Um im weiteren Verlauf des Einschiebens des Verschlusselements 2 in das Zylinderrohr 1 auch eine Beschädigung des Dichtelements 10 beim Übertritt über die Ringnut 3.1 des Zylinderrohres 1 zu vermeiden, weist die Ringnut 3.1 ferner eine Ringnutabschrägung 9 auf, die zugleich auch erforderlich ist, wenn mehrere Kopplungsringe parallel, aber mit axialem Abstand zueinander, Anwendung finden.
Als besonderes technologisches Merkmal des vorliegenden Arbeitszylinders, weist der Außendurchmesser des Verschlusselements 2 gegenüber dem Innendurchmesser des Zylinderrohres 1 ein Übermaß auf.
Mittels des Übermaßes wird in der Montageendlage des Verschlusselements 2 eine Presspassung und somit ein Reibschluss zwischen diesem und dem Zylinderrohr 1 bereitgestellt.
Durch den bereitgestellten Reibschluss werden das Verschlusselement 2 und das Zylinderrohr 1 axial in deren Lage zueinander spielfrei festgelegt, wodurch ein axiales Wandern des Verschlusselements 2 gegenüber dem Zylinderrohr 1 wirksam unterbunden wird.
Auf diese Weise sind sogenannte Abriebschrotungen an dem Dichtelement 10 verhinderbar, welche andernfalls, insbesondere bei Lastwechselbelastungen des Arbeitszylinders und dadurch hervorgerufene geringfügige Bewegungen des Verschlusselements 2 gegenüber dem Zylinderrohr 1, auftreten können.

Derartige geringfügige Bewegungen zwischen Verschlusselement und Zylinderrohr können nach dem Stand der Technik dadurch auftreten, dass die, den Kopplungsring aufnehmenden, Ringnuten gegenüber dem Kopplungsring ein definiertes Übermaß aufweisen müssen, durch welches es dem Kopplungsring ermöglicht wird, bei Erreichen der Endlage des Verschlusselements in dem Zylinderrohr, seine Endposition in den Ringnuten einzunehmen.

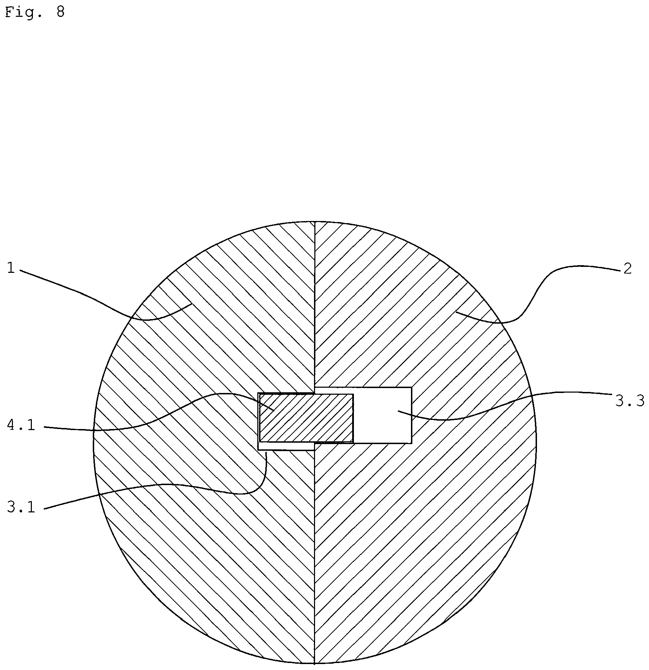

Zur Veranschaulichung wird in diesem Zusammenhang auf Fig. 8 verwiesen, welche die Kopplungspartner 1 und 2 in deren Spielendlagen, sowie den Kopplungsring 4.1 in seiner Endposition in den Ringnuten 3.1 und 3.3 und das Übermaß der Ringnuten 3.1 und 3.3 gegenüber dem Kopplungsring 4.1 in einer Detailansicht zeigt.
Die Fig. 8 zeigt hierbei eine Ausführungsform des Arbeitszylinders, bei welcher die Ringnuten 3.1 und 3.3 nicht über eine Anlaufschräge verfügen. Fig. 8 zeigt die Relativposition von Zylinderohr 1 und Verschlusselement 2, die diese durch die Belastung in einer Spielendlage eingenommen haben.

Als weiterer Vorteil ermöglicht der bereitgestellte Reibschluss die Aufnahme axial wirkender Kräfte während einer Belastung des Arbeitszylinders und ein Verhindern eines unerwünschten Verdrehens des Verschlusselements 2 gegenüber dem Zylinderrohr 1.
Insbesondere durch die zusätzliche Aufnahme axialer Kräfte durch den Reibschluss können Maximalbelastung und Dauerfestigkeit des Arbeitszylinders optimiert werden.

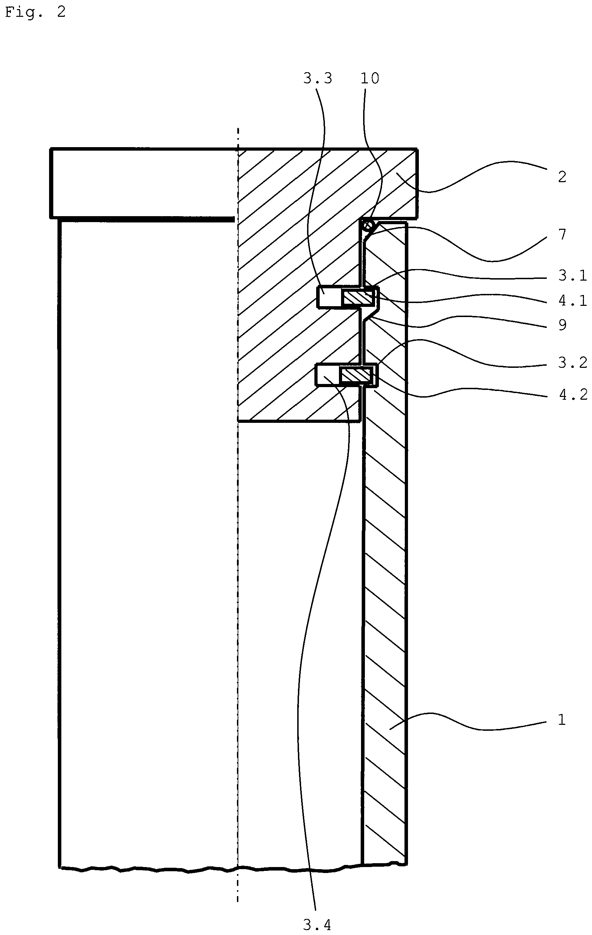

Fig. 2 zeigt ein Ausführungsbeispiel eines erfindungsgemäßen Arbeitszylinders im Halbschnitt, wobei der Arbeitszylinder zur Erhöhung der axialen Belastbarkeit, zwei Kopplungsringe 4.1 und 4.2 aufweist.

Vorliegend ist der Kopplungsring 4.1 in einer ersten Ringnut 3.1 des Zylinderrohres 1 und in einer ersten Ringnut 3.3 des Verschlusselements 2 angeordnet.

Der Kopplungsring 4.2 ist dagegen in einer zweiten Ringnut 3.2 des Zylinderrohres 1 und in einer zweiten Ringnut 3.4 des Verschlusselements 2 angeordnet.

Um ein vollständiges Einschieben des Verschlusselements 2 in das Zylinderrohr 1 zu gewährleisten, ist an der Ringnut 3.1 des Zylinderrohres 1 eine Ringnutabschrägung 9 vorgesehen.
Diese Ringnutabschrägung 9 bewirkt auf besonders vorteilhafte Weise, dass der zweite Kopplungsring 4.2 nach dessen Entspannung in die Ringnut 3.1 von der Ringnutabschrägung 9 wieder in die Ringnut 3.3 des Verschlusselements 2 zurückgedrückt wird und so das Einschieben des Verschlusselements 2 in das Zylinderrohr 1 fortgeführt werden kann.

Des Weiteren ist im vorliegenden Ausführungsbeispiel nach Fig. 2 das Dichtelement 10 im Bereich der Anlaufschräge 7 des Zylinderrohres 1 angeordnet.
Die Anordnung des Dichtelements 10 in diesem Bereich hat insbesondere den Vorteil, dass kein zusätzlicher Montageraum zur Aufnahme des Dichtelements 10 in dem Zylinderrohr 1 oder dem Verschlusselement 2 vorgehalten werden muss. Der Herstellungsaufwand für einen erfindungsgemäßen Arbeitszylinder kann somit verringert werden.

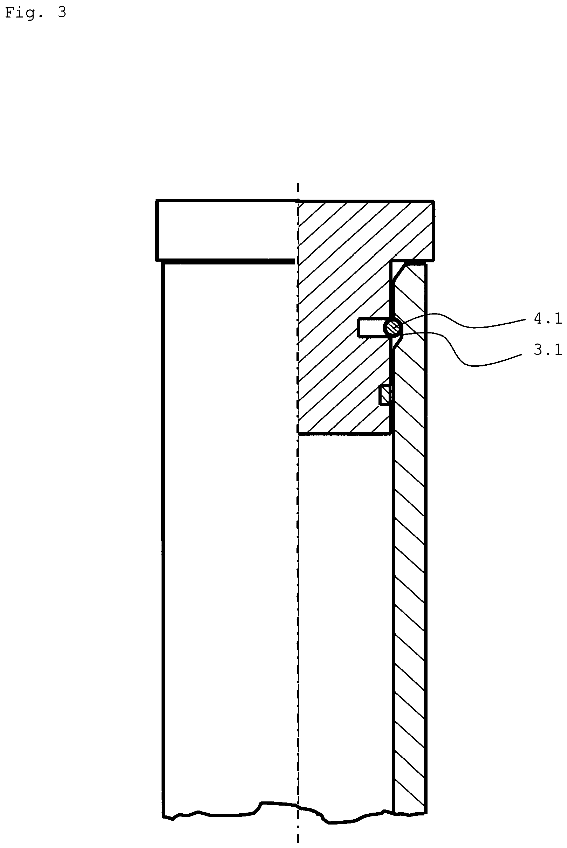

In einem weiteren Ausführungsbeispiel gemäß Fig. 3 weist der Kopplungsring 4.1 einen kreisrunden Querschnitt auf.

Ein solcher kreisrunder Querschnitt geht besonders vorteilhaft mit einer Reduzierung der Herstellungskosten für den Kopplungsring 4.1 sowie mit einer Optimierung des Verlaufs der inneren Spannungen in dem Kopplungsring 4.1 während dessen Verspannung einher.

Um einen möglichst großen Bereich zu schaffen, in welchem sich ein Formschluss zwischen dem Kopplungsring 4.1 und der Ringnut 3.1 des Zylinderrohres 1 einstellt, ist diese in deren Kontur an die Querschnittsgeometrie des Kopplungsrings 4.1 angepasst.

Das Anpassen der Ringnutkontur an den Querschnitt des Kopplungsrings 4.1 hat darüber hinaus den technologischen Vorteil, dass, aufgrund der sich einstellenden Rundungen der Ringnutkontur, Kerbwirkungen, welche bei einer Belastung der formschlüssigen Verbindung auftreten, weitestgehend vermieden werden können.

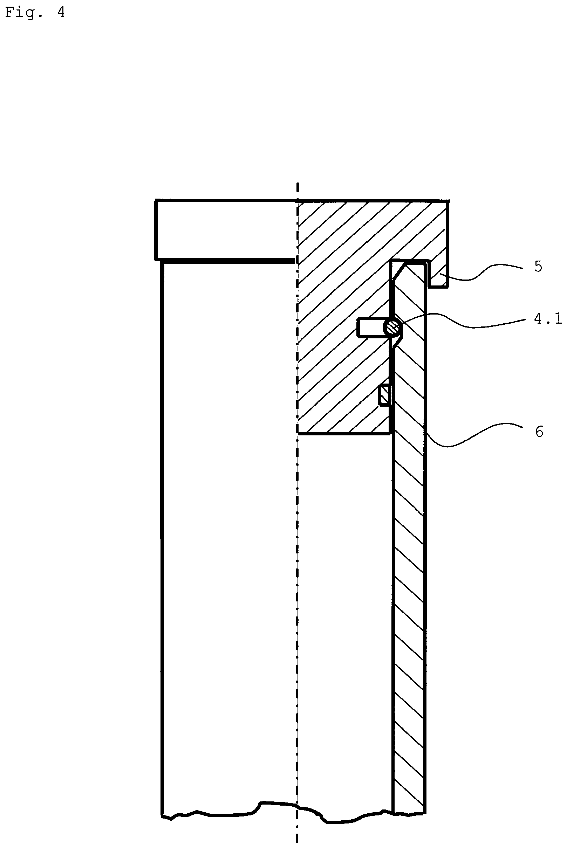

Fig. 4 zeigt ein weiteres Ausführungsbeispiel eines erfindungsgemäßen Arbeitszylinders.
Zusätzlich zu der Variante aus Fig. 3 weist hierbei das Verschlusselement 2 eine Überkragung 5 auf, welche die äußere Mantelfläche 6 des Zylinderrohres 1 überkragt.

Es wurde gefunden, dass durch das Vorsehen der Überkragung 5, bei einem in dem Zylinderrohr 1 anliegenden Innendruck, einer nach Außen gerichteten Verformung des Zylinderrohres 1 im Bereich der Überkragung 5 entgegengewirkt werden kann, wodurch sich die Passungswerte der gekoppelten Teile, also der Kopplungspartner 1, 2, im Zustand der Betriebsbelastung nicht ändern.

Die Überkragung 5 hat somit im Falle einer vorliegenden kraftschlüssigen Pressverbindung zwischen dem Zylinderrohr 1 und dem Verschlusselement 2 den besonderen technologischen Vorteil, dass kein Lösen der kraftschlüssigen Verbindung, wie es unter Umständen bei anliegenden Innendrücken in dem Zylinderrohr 1 auftreten kann, eintritt.

Somit wird durch die Überkragung 5 vor allem die Dauerfestigkeit eines erfindungsgemäßen Arbeitszylinders positiv beeinflusst.

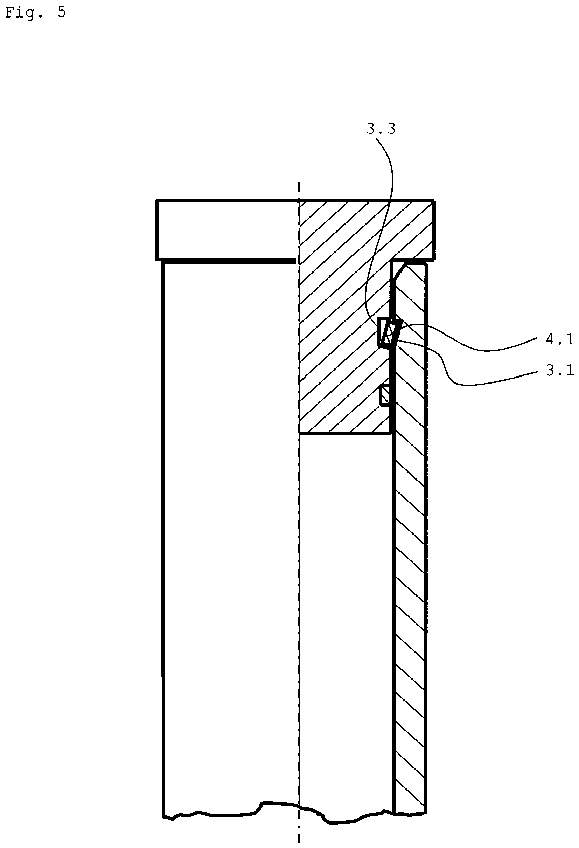

Als weiteres Ausführungsbeispiel zeigt Fig. 5 einen erfindungsgemäßen Arbeitszylinder mit einem konisch ausgebildeten Kopplungsring 4.1, welcher mehrere Segmente aufweist.

In diesem Fall sind die Ringnuten 3.1 und 3.3 in deren geometrischer Ausformung so ausgebildet, dass bei Erreichen der Montageendlage des Verschlusselements 2 in dem Zylinderrohr 1, ein zumindest teilweises Einkippen der Segmente des Kopplungsrings 4.1 in die Ringnut 3.1 des Zylinderrohres 1 erreicht wird.

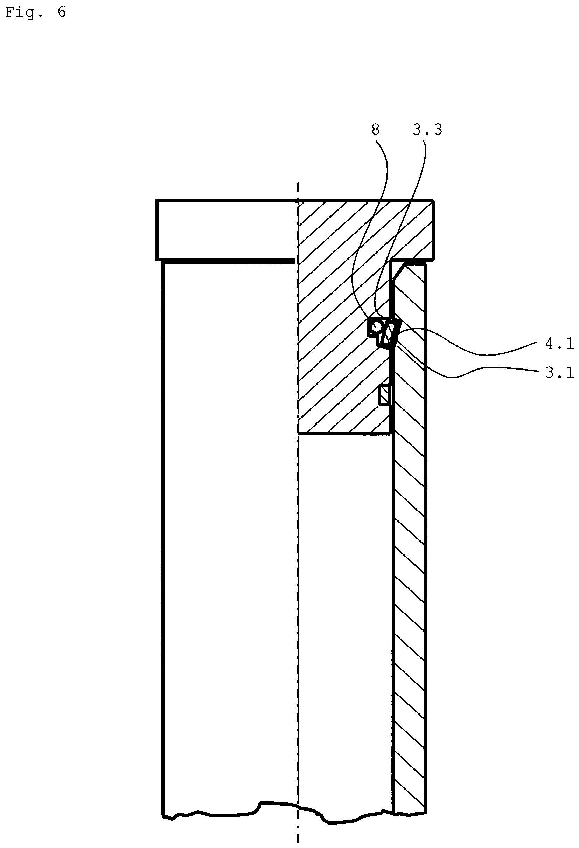

Fig. 6 zeigt eine Weiterbildung des Arbeitszylinders gemäß dem Ausführungsbeispiel aus Fig. 5.

Dabei weist ein Arbeitszylinder gemäß Fig. 6 zusätzlich ein elastisches Element 8 auf, welches erfindungsgemäß in der Ringnut 3.3 des Verschlusselements 2 angeordnet ist.

Das elastische Element 8 wirkt erfindungsgemäß radial auf den Kopplungsring 4.1 ein und unterstützt somit dessen Entspannung bei Erreichen der Endlage des Verschlusselements 2 in dem Zylinderrohr 1.

Des Weiteren wird durch das elastische Element 8 ein korrekter Sitz des Kopplungsrings 4.1 in den Ringnuten 3.1 und 3.3, auch bei einer ungenügenden Entspannung des Kopplungsrings 4.1, gewährleistet.

Das elastische Element 8 kann erfindungsgemäß beispielsweise durch ein Elastomerelement mit kreisrundem Querschnitt oder durch ein ebenso geformtes Gummielement gebildet werden.
Darüber hinaus können je nach Anwendungsfall auch elastische Elemente mit anderen Querschnitten verwendet werden.

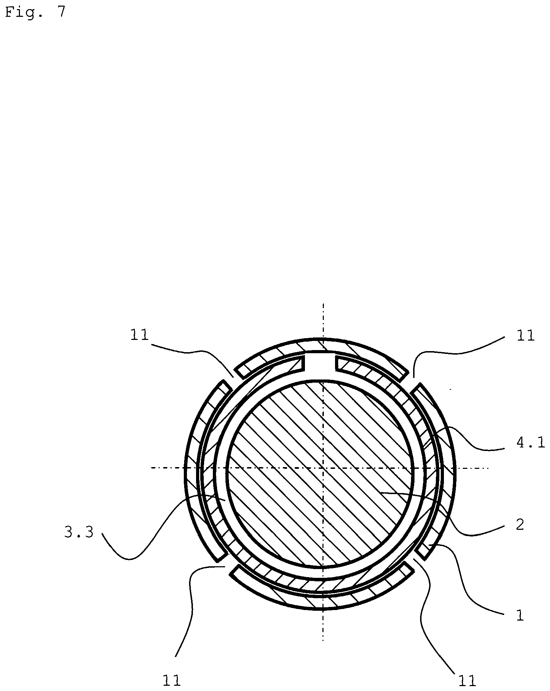

Fig. 7 zeigt ein weiteres Ausführungsbeispiel eines erfindungsgemäßen Arbeitszylinders in einer geschnittenen Draufsicht.

Dabei sieht das Ausführungsbeispiel gemäß Fig. 7 vor, dass in dem Zylinderrohr 1 Zugangsöffnungen 11 angeordnet sind, über welche beispielsweise mittels eines geeigneten Werkzeuges (nicht dargestellt) oder einer Schraube (nicht dargestellt) ein Einwirken auf den Kopplungsring 4.1 von Außen ermöglicht wird. Vorzugsweise sind die Zugangsöffnungen um jeweils 120 Grad versetzt angeordnet.

Mittels einer derartigen äußeren Einwirkung auf den Kopplungsring 4.1 kann dieser auf besonders vorteilhafte Art und Weise wieder in die Ringnut 3.3 des Verschlusselements 2 zurückgedrückt und dadurch der Eingriff des Kopplungsrings 4.1 in die Ringnut des Zylinderrohres 1 aufgehoben werden.

Somit wird als besonderer technologischer Vorteil eine lösbare Verbindung zwischen dem Zylinderrohr 1 und dem Verschlusselement 2 bereitgestellt.

In einer besonders vorteilhaften Ausführungsform können die Zugangsöffnungen 11 mit einem Gewinde versehen sein, in welches eine Schraube (nicht dargestellt) einschraubbar ist, welche wiederrum das Zurückdrücken des Kopplungsrings 4.1 in die Ringnut 3.1 des Verschlusselements 2 bewirkt.

### Verwendete Bezugszeichen

- 1: Zylinderrohr
- 2: Verschlusselement
- 3.1: erste Ringnut Zylinderrohr
- 3.2: zweite Ringnut Zylinderrohr
- 3.3: erste Ringnut Verschlusselement
- 3.4: zweite Ringnut Verschlusselement
- 4.1: erster Kopplungsring
- 4.2: zweiter Kopplungsring
- 5: Überkragung
- 6: Mantelfläche
- 7: Anlaufschräge
- 8: elastisches Element
- 9: Ringnutabschrägung der ersten Ringnut Verschlusselement
- 10: Dichtelement
- 11: Zugangsöffnungen

## Patentansprüche

1. Arbeitszylinder, aufweisend einen ersten Kopplungspartner und einen zweiten Kopplungspartner, wobei der erste Kopplungspartner als Zylinderrohr (1) und der zweite Kopplungspartner als Verschlusselement (2) ausgebildet sind und wobei ein Kopplungspartner in den jeweils anderen Kopplungspartner axial eingeschoben ist,
wobei die Kopplungspartner jeweils eine Ringnut (3) aufweisen, wobei die Ringnut (3) des eingeschobenen Kopplungspartners durch eine Außennut und die Ringnut (3) des anderen Kopplungspartners durch eine Innennut gebildet werden und wobei sich die Ringnuten (3) der Kopplungspartner korrespondierend gegenüberliegen, wobei der Arbeitszylinder einen Kopplungsring (4) aufweist, welcher federnd spannbar ausgebildet ist und welcher, bei einer Verformung in Spannrichtung, vollständig von der Ringnut (3) eines Kopplungspartners aufnehmbar ist und welcher, bei einer Verformung in Entspannrichtung, in die Ringnuten (3) beider Kopplungspartner eingreift, wobei durch den Eingriff des Kopplungsrings (4) in die Ringnuten (3) beider Kopplungspartner eine formschlüssige Verbindung zwischen diesen bereitgestellt wird,
**dadurch gekennzeichnet dass** der eingeschobene Kopplungspartner, gegenüber einem Innendurchmesser des anderen Kopplungspartners, ein Übermaß aufweist, wobei zwischen den Kopplungspartnern eine kraftschlüssige Verbindung bereitgestellt wird, wobei der erste und der zweite Kopplungspartner unterschiedlich hohe Elastizitätsmoduln aufweisen, wobei eine erste Überdeckungsfläche des im Eingriff stehenden Kopplungsrings (4) mit einer Seitenwandung der Ringnut (3) des einen Kopplungspartners mit dem höheren Elastizitätsmodul kleiner ist als eine zweite Überdeckungsfläche des Kopplungsrings (4) mit einer Seitenwandung der Ringnut (3) des anderen Kopplungspartners mit dem niedrigeren Elastizitätsmodul.

2. Arbeitszylinder nach Anspruch 1,
**dadurch gekennzeichnet,**
**dass** der zweite Kopplungspartner in den ersten Kopplungspartner einschiebbar ist, wobei der Kopplungsring (4) von der Ringnut (3) des zweiten Kopplungspartners vollständig aufnehmbar ist.

3. Arbeitszylinder nach Anspruch 2,
**dadurch gekennzeichnet,**
**dass** der zweite Kopplungspartner eine Überkragung (5) aufweist, wobei die Überkragung (5) den ersten Kopplungspartner an dessen äußerer Mantelfläche (6) abschnittsweise übergreift.

4. Arbeitszylinder nach einem der vorhergehenden Ansprüche,
**dadurch gekennzeichnet,**
**dass** der Kopplungsring (4) oder der, den Kopplungsring (4) nicht vollständig aufnehmende Kopplungspartner, eine Anlaufschräge (7) aufweist, wobei durch die Anlaufschräge (7) die vollständige Aufnahme des Kopplungsrings (4) in der jeweiligen Ringnut (3) des, den Kopplungsring (4) vollständig aufnehmenden Kopplungspartners, bewirkt wird.

5. Arbeitszylinder nach einem der vorhergehenden Ansprüche,
**dadurch gekennzeichnet,**
**dass** die Kopplungspartner weitere, axial versetzte, Ringnuten (3) zur Aufnahme weiterer, axial versetzter, Kopplungsringe (4) aufweisen.

6. Arbeitszylinder nach einem der vorhergehenden Ansprüche,
**dadurch gekennzeichnet,**
**dass** der Kopplungsring (4) einen kreisförmigen Querschnitt aufweist.

7. Arbeitszylinder nach einem der Ansprüche 1 bis 5, **dadurch gekennzeichnet,**
**dass** der Kopplungsring (4) konisch und segmentiert ausgebildet ist.

8. Arbeitszylinder nach einem der vorhergehenden Ansprüche,
**dadurch gekennzeichnet,**
**dass** in der, den Kopplungsring (4) vollständig aufnehmenden Ringnut (3) des ersten oder zweiten Kopplungspartners, ein auf den Kopplungsring (4) radial einwirkendes elastisches Element (8) vorgesehen ist.

9. Arbeitszylinder nach einem der vorhergehenden Ansprüche,
**dadurch gekennzeichnet,**
**dass** der nicht eingeschobene Kopplungspartner radial angeordnete Zugangsöffnungen (11) aufweist, wobei durch die Zugangsöffnungen (11) ein Einwirken von Außen auf den Kopplungsring (4) ermöglicht wird.

## Claims

1. A working cylinder comprising a first coupling partner and a second coupling partner, wherein the first coupling partner is designed as a cylindrical tube (1) and the second coupling partner is designed as a closing element (2), and wherein one coupling partner is inserted axially into the other coupling partner,
wherein each of the coupling partners has an annular groove (3), wherein the annular groove (3) of the inserted coupling partner is formed by an outer groove and the annular groove (3) of the other coupling partner is formed by an inner groove, and wherein the annular grooves (3) of the coupling partners are positioned opposite one another in a corresponding manner, wherein the working cylinder has a coupling ring (4) which is resiliently tensible and which, when deformed in the tension direction, can be completely accommodated by the annular groove (3) of one coupling partner and which, whend deformed in the release direction, engages in the annular grooves (3) of both coupling partners, wherein the engagement of the coupling ring (4) in the annular grooves (3) of both coupling partners provides a positive connection between them,
**characterized in**
**that** the inserted coupling partner is oversized compared to an inner diameter of the other coupling partner, wherein a frictional connection is provided between the coupling partners, wherein the first and second coupling partners have different elasticity moduli, wherein a first overlapping surface of the engaging coupling ring (4) overlapping a side wall of the ring groove (3) of the one coupling partner with the higher elasticity modulus is smaller than a second overlapping surface of the coupling ring (4) overlapping a side wall of the ring groove (3) of the other coupling partner with the lower elasticity modulus.

2. The working cylinder according to claim 1,
**characterized in**
**that** the second coupling partner can be inserted in the first coupling partner, wherein the coupling ring (4) can be completely accommodated by the ring groove (3) of the second coupling partner.

3. The working cylinder according to claim 2,
**characterized in**
**that** the second coupling partner is provided with a projection (5), wherein the projection (5) overlaps the first coupling partner at its outer skin surface (6) in sections.

4. The working cylinder according to one of the preceding claims,
**characterized in**
**that** the coupling ring (4) or the coupling partner which does not completely accommodate the coupling ring (4) has a batter inclination (7), wherein the batter inclination effects the complete accommodation of the coupling ring (4) in the corresponding ring groove (3) of the coupling partner which completely accommodates the coupling ring (4).

5. The working cylinder according to one of the preceding claims,
**characterized in**
**that** the coupling partners are provided with further, axially offset ring grooves (3) for accommodating further, axially offset coupling rings (4).

6. The working cylinder according to one of the preceding claims,
**characterized in**
**that** the coupling ring (4) has a circular cross section.

7. The working cylinder according to claims 1 to 5,
**characterized in**
**that** the coupling ring (4) has a conical and segmented design.

8. The working cylinder according to one of the preceding claims,
**characterized in**
**that** in the ring groove (3) of the first or second coupling partner which completely accommodates the coupling ring (4) an elastic element acting radially on the coupling ring (4) is provided.

9. The working cylinder according to one of the preceding claims,
**characterized in**
**that** the not inserted coupling partner has radially arranged access openings (11), wherein an action on the coupling ring (4) from the outside is made possible through the access openings (11).

## Revendications

1. Vérin présentant un premier partenaire d'accouplement et un deuxième partenaire d'accouplement, le premier se présentant sous la forme d'un tube cylindrique (1) et le deuxième sous la forme d'un élément de fermeture (2), un partenaire d'accouplement étant introduit axialement dans l'autre partenaire d'accouplement,
les partenaires d'accouplement présentant respectivement une rainure annulaire (3), la rainure annulaire (3) du partenaire d'accouplement introduit étant formée par une rainure extérieure et la rainure annulaire (3) de l'autre partenaire d'accouplement par une rainure intérieure et les rainures annulaires (3) des partenaires d'accouplement se faisant face de manière correspondante, et le vérin présentant une bague d'accouplement (4) qui peut subir une tension élastique et qui, lors d'une déformation dans le sens de la tension, peut être reçue entièrement par la rainure annulaire (3) d'un partenaire d'accouplement et qui, lors d'une déformation dans le sens d'une détente, pénètre dans les rainures annulaires (3) des deux partenaires d'accouplement, l'introduction de la bague d'accouplement (4) dans les rainures annulaires (3) des deux partenaires d'accouplement créant un assemblage par complémentarité de forme entre eux,
est **caractérisé en ce que**
le partenaire d'accouplement introduit est surdimensionné par rapport au diamètre intérieur de l'autre partenaire d'accouplement, ce qui crée un assemblage à force supplémentaire entre les deux partenaires d'accouplement, le premier et le deuxième partenaire d'accouplement présentant des modules d'élasticité différents, et une première surface de recouvrement de la bague d'accouplement (4) en prise avec une paroi latérale de la rainure annulaire (3) du partenaire d'accouplement avec le plus haut module d'élasticité étant plus petite que la deuxième surface de recouvrement de la bague d'accouplement (4) en prise avec une paroi latérale de la rainure annulaire (3) de l'autre partenaire d'accouplement avec le plus bas module d'élasticité.

2. Vérin suivant la revendication 1
est **caractérisé en ce que**
le deuxième partenaire d'accouplement peut être introduit dans le premier partenaire d'accouplement et la bague d'accouplement (4) peut être prise entièrement par la rainure annulaire (3) du deuxième partenaire d'accouplement.

3. Vérin suivant la revendication 2
est **caractérisé en ce que**
le deuxième partenaire d'accouplement est muni d'une collerette (5) et cette collerette (5) partiellement s'étend sur le premier partenaire d'accouplement à sa surface enveloppante extérieure (6).

4. Vérin suivant une des revendications précédentes
est **caractérisé en ce que**
la bague d'accouplement (4) ou le partenaire d'accouplement qui ne loge pas complètement la bague d'accouplement (4), présente un biais d'attaque (7) et ce biais d'attaque (7) provoque le logement complet de la bague d'accouplement (4) dans la rainure angulaire (3) respective du partenaire d'accouplement qui loge la bague d'accouplement (4) de façon complète.

5. Vérin suivant une des revendications précédentes
est **caractérisé en ce que**
les partenaires d'accouplement présentent d'autres rainures angulaires (3) axialement décalées pour le logement d'autres bagues d'accouplement axialement décalées.

6. Vérin suivant une des revendications précédentes
est **caractérisé en ce que**
la bague d'accouplement (4) possède une section transversale circulaire.

7. Vérin suivant une ou plusieurs des revendications 1 à 5
est **caractérisé en ce que**
la bague d'accouplement (4) est réalisée sous forme conique et segmentée.

8. Vérin suivant une des revendications précédentes
est **caractérisé en ce qu'**
un élément élastique (8) agissant radialement sur la bague d'accouplement (4) est prévu dans la rainure annulaire (3) du premier ou deuxième partenaire d'accouplement pour le logement complet de la bague d'accouplement (4).

9. Vérin suivant une des revendications précédentes
est **caractérisé en ce que**
le partenaire d'accouplement non introduit présente des ouvertures d'accès disposées radialement (11), lesdites ouvertures d'accès (11) permettant d'agir sur la bauge d'accouplement (4) de l'extérieur.
